# EUROPEAN PATENT APPLICATION

(11) **EP 3 778 659 A1**
(43) Date of publication of application: **17.02.2021**
(21) Application number: 19777172.8
(22) Date of filing: 26.03.2019
(51) Int. Cl.: C08F 14/22, F16J 15/10

(54) **MOLDED ARTICLE HAVING COOLING-LIQUID-CONTACT SURFACE**

(30) Priority: 30.03.2018 JP 2018069053
(71) Applicant: DAIKIN INDUSTRIES, LTD., Osaka 530-8323 (JP)
(72) Inventor: TERADA, Junpei, Osaka-shi, Osaka 530-8323 (JP); KAMIYA, Yusuke, Osaka-shi, Osaka 530-8323 (JP); FURUTANI, Takahiro, Osaka-shi, Osaka 530-8323 (JP)
(74) Representative: Hoffmann Eitle
(86) International application number: PCT/JP2019/012958
(87) International publication number: WO 2019/189233

(57) **Abstract**

Provided is a molded product having a surface that is to be in contact with a coolant, the surface being formed of a crosslinked product of an amorphous fluorine-containing elastomer having a glass transition temperature of 25°C or less, the fluorine-containing elastomer being a copolymer of:
vinylidene fluoride;
a fluorine-containing monomer represented by formula (1) below:

CHX^{a} = CX^{b}Rf (1)

wherein one of X^{a} and X^{b} is H, the other thereof is F, and Rf is a linear or branched fluoroalkyl group having 1 to 12 carbon atoms; and
another monomer copolymerizable therewith,
wherein a molar ratio of units of the vinylidene fluoride to units of the fluorine-containing monomer is 87/13 to 20/80, and units of the other monomer account for 0 to 50 mol% based on all monomer units.

## Description

### TECHNICAL FIELD

The present disclosure relates to a molded product having a surface in contact with a coolant.

### BACKGROUND ART

Ethylene-propylene-diene rubber (EPDM), hydrogenated nitrile rubber (H-NBR), nitrile rubber (NBR), fluoroelastomer (FKM), silicone rubber (VMQ), and the like are known to be used for molded products that come in contact with automotive engine coolants, such as automotive engines, inverters, batteries, and hoses (Patent Document 1).

### RELATED ART

### PATENT DOCUMENTS

Patent Document 1: Japanese Patent Application Laid-Open No. 2017-226805

### SUMMARY OF THE INVENTION

### PROBLEM TO BE SOLVED BY THE INVENTION

In cooling systems or the like of internal combustion engines, high-temperature coolants circulate, and seal materials, piping, and the like have high temperature. Therefore, it is desired that the molded products that come into contact with such a coolant should not crack even if they are kept in contact with the coolant at a high temperature for a long time. However, it has been found that conventional fluoroelastomer (FKM) cracks when it is kept in contact with the coolant at a high temperature for a long time. An object of the present disclosure is to provide a molded product that is less likely to crack even if it is kept in contact with a coolant at a high temperature for a long time.

### MEANS FOR SOLVING THE PROBLEM

The present disclosure provides a molded product having a surface that is to be in contact with a coolant, the surface being formed of a crosslinked product of an amorphous fluorine-containing elastomer having a glass transition temperature of 25°C or less, the fluorine-containing elastomer being a copolymer of:
vinylidene fluoride;
a fluorine-containing monomer represented by formula (1) below:

   CHX^{a} = CX^{b}Rf (1)

   wherein one of X^{a} and X^{b} is H, the other thereof is F, and Rf is a linear or branched fluoroalkyl group having 1 to 12 carbon atoms; and
another monomer copolymerizable therewith,
wherein a molar ratio of units of the vinylidene fluoride to units of the fluorine-containing monomer is 87/13 to 20/80, and
units of the other monomer account for 0 to 50 mol% based on all monomer units.

Preferably, the fluorine-containing elastomer contains an iodine atom or a bromine atom with a total content of 0.01 to 10 wt%.

Preferably, the coolant contains an alcohol.

Preferably, the molded product of the present disclosure is a seal material, a tube, or a hose.

Preferably, the molded product of the present disclosure is for use in a cooling system of an engine, a fuel cell, or a secondary battery, or in a cooling system of equipment to be used in the field of chemicals, medicine, food equipment, or equipment and parts for energy resource exploration and mining.

Preferably, the surface of the molded product of the present disclosure is to be in contact with a coolant at 100°C or more when use.

### EFFECT OF INVENTION

The molded product of the present disclosure is less likely to crack even if it is kept in contact with a coolant at a high temperature for a long time.

### DESCRIPTION OF EMBODIMENTS

Hereinafter, specific embodiments of the present disclosure will be described in detail, but the present disclosure is not limited to the following embodiments.

The molded product of the present disclosure has a surface that is to be in contact with a coolant, the surface being formed of a crosslinked product of an amorphous fluorine-containing elastomer having a glass transition temperature of 25°C or less, and the fluorine-containing elastomer is a copolymer of: vinylidene fluoride (VDF); a fluorine-containing monomer represented by formula (1) below: CHX^{a} = CX^{b}Rf (1), wherein one of X^{a} and X^{b} is H, the other thereof is F, and Rf is a linear or branched fluoroalkyl group having 1 to 12 carbon atoms; and another monomer copolymerizable therewith. The molar ratio of units of the vinylidene fluoride to units of the fluorine-containing monomer is 85/15 to 20/80, and units of the other monomer account for 0 to 50 mol% based on all monomer units.

The fluorine-containing elastomer has a specific configuration and, as a result, has an extremely low glass transition temperature. Further, a fluorine-containing polymer containing units of the fluorine-containing monomer (1) represented by formula (1) above has chemical resistance, oil resistance, heat resistance, flexibility, and cold resistance and is less likely to crack even if it is kept in contact with a coolant at a high temperature for a long time. There are also advantages of excellent crosslinking properties and easy production. Further, it is preferable to be amorphous.

The term "high temperature" means, for example, 100°C or more. The term "amorphous" in the present disclosure refers to exhibiting a melting peak (ΔH) of 2.0 J/g or less in the DSC measurement (at a temperature increase rate of 10°C/minute).

The fluorine-containing elastomer has a glass transition temperature of 25°C or less. The glass transition temperature may be also 0°C or less. The glass transition temperature is preferably -5°C or less, more preferably -10°C or less. The glass transition temperature can be -20°C or less. Having such an extremely low glass transition temperature, the fluorine-containing elastomer has excellent low temperature properties (cold resistance). Here, the glass transition temperature is determined in the following manner: 10 mg of a sample is cooled to -75°C and thereafter heated at 20°C/minute using a differential scanning calorimeter (X-DSC823e, available from Hitachi High-Tech Science Corporation) to obtain a DSC curve; and the temperature at which the extended line of the baseline before and after the secondary transition of the DSC curve intersects the tangent to the DSC curve at the inflection point is defined as the glass transition temperature.

The fluorine-containing monomer represented by formula (1) is preferably a monomer wherein Rf is a linear fluoroalkyl group, more preferably a monomer wherein Rf is a linear perfluoroalkyl group, in view of excellent chemical resistance, oil resistance, heat resistance, flexibility, and cold resistance, which result in that any crack is less likely to develop even if the molded product is kept in contact with the coolant at a high temperature for a long time. The "fluoroalkyl group" herein is an alkyl group with part or all of hydrogen atoms replaced with fluorine atoms. The "perfluoroalkyl group" herein is an alkyl group with all of hydrogen atoms replaced with fluorine atoms. Rf preferably has 1 to 6 carbon atoms. In formula (1) above, it is preferable that X^{a} and X^{b} be H and F, respectively. Examples of the fluorine-containing monomer represented by formula (1) include CH₂=CFCF₃, CH₂=CFCF₂CF₃, CH₂=CFCF₂CF₂CF₃, and CH₂=CFCF₂CF₂CF₂CF₃. Among these, 2,3,3,3-tetrafluoropropene represented by CH₂=CFCF₃ is preferable.

The fluorine-containing elastomer may be further include another monomer than the vinylidene fluoride or the fluorine-containing monomer represented by formula (1). The other monomer is not limited, as long as it is a monomer copolymerizable with the vinylidene fluoride and the fluorine-containing monomer represented by formula (1), and one or more monomers may be used as the other monomer.

The other monomer is preferably at least one selected from the group consisting of tetrafluoroethylene (TFE), hexafluoropropylene (HFP), perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, propylene, alkyl vinyl ether, and a monomer that gives a crosslinking site. The other monomer is more preferably at least one selected from the group consisting of TFE, hexafluoropropylene, perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, alkyl vinyl ether, and a monomer that gives a crosslinking site. TFE is further preferable. The other monomer consisting only of TFE is also one of preferable embodiments.

Examples of the monomer that gives a crosslinking site in the fluorine-containing elastomer include:
an iodine- or bromine-containing monomer represented by the formula:

   CX¹₂ = CX¹-Rf¹CHR¹X²

   wherein X¹ is a hydrogen atom, a fluorine atom, or -CH₃,
   Rf¹ is a fluoroalkylene group, a perfluoroalkylene group,
   a fluoro(poly)oxyalkylene group, or a
   perfluoro(poly)oxyalkylene group, R¹ is a hydrogen atom or -CH₃, and X² is an iodine atom or a bromine atom,
   a monomer represented by the formula:

   CF₂ = CFO(CF₂CF(CF₃)O)ₘ(CF₂)ₙ-X³

   wherein m is an integer of 0 to 5, n is an integer of 1 to 3, and X³ is a cyano group, a carboxyl group, an alkoxycarbonyl group, an iodine atom, or a bromine atom, and
a monomer represented by the formula:

   CH₂ = CFCF₂O(CF(CF₃)CF₂O)ₘ(CF(CF₃))ₙ⁻X⁴ wherein m is an integer of 0 to 5, n is an integer of 1 to 3, and X⁴ is a cyano group, a carboxyl group, an alkoxycarbonyl group, an iodine atom, a bromine atom, or -CH₂OH.

Among these, at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF₂CH₂I, CF₂=CFOCF₂CF(CF₃)OCF₂CF₂CH₂I, CH₂=CFCF₂OCF(CF₃)CF₂OCF(CF₃)CN, CH₂=CFCF₂OCF (CF₃)CF₂OCF(CF₃)COOH, and CH₂=CFCF₂OCF(CF₃)CF₂OCF(CF₃)CH₂OH is preferable. The monomer that gives crosslinking sites is particularly preferably CF₂ = CFOCF₂CF₂CH₂I, since it can improve the crosslinking density to give good compression set in crosslinking using a peroxide. Other than above, the monomers described below as examples of the monomer that gives a crosslinking site for a copolymer (III) can be also suitably used.

In the fluorine-containing elastomer, the molar ratio of units of the vinylidene fluoride to units of the fluorine-containing monomer (1) represented by formula (1) is preferably 85/15 to 20/80. The molar ratio of units of the vinylidene fluoride to units of the fluorine-containing monomer (1) represented by formula (1) is preferably 22/78 or more, more preferably 50/50 or more, further preferably 60/40 or more. Further, units of the other monomer account for 0 to 50 mol%, more preferably 0 to 20 mol%, based on all monomer units.

Preferably, the fluorine-containing elastomer is a copolymer only of vinylidene fluoride, the fluorine-containing monomer (1) represented by formula (1), and the other monomer.

The fluorine-containing elastomer may contain at least one of an iodine atom and a bromine atom and preferably contains an iodine atom. In such a case, the total content of the iodine atom and the bromine atom is preferably 0.001 to 10 wt%.

In view of excellent chemical resistance, oil resistance, heat resistance, flexibility, and cold resistance, which result in that any crack is less likely to develop even if the molded product is kept in contact with the coolant at a high temperature for a long time, the fluorine-containing elastomer is preferably at least one selected from the group consisting of: a copolymer (I) only of vinylidene fluoride and the fluorine-containing monomer (1), wherein the molar ratio of units of the vinylidene fluoride to units of the fluorine-containing monomer (1) is 87/13 to 22/78; a copolymer (II) only of vinylidene fluoride, the fluorine-containing monomer (1), and another monomer copolymerizable therewith, wherein the molar ratio of units of the vinylidene fluoride to units of the fluorine-containing monomer (1) is 85/15 to 20/80, and units of the other monomer account for 1 to 50 mol% based on all monomer units; and a copolymer (III) of vinylidene fluoride, the fluorine-containing monomer (1), and another monomer copolymerizable therewith, wherein the molar ratio of units of the vinylidene fluoride to units of the fluorine-containing monomer (1) is 85/15 to 20/80, units of the other monomer account for 0 to 50 mol% based on all monomer units, and the copolymer contains an iodine atom or a bromine atom in a total content of 0.001 to 10 wt%.

The copolymer (I) is only of vinylidene fluoride and the fluorine-containing monomer represented by formula (1), wherein the molar ratio of units of the vinylidene fluoride to units of the fluorine-containing monomer (1) represented by formula (1) is 87/13 to 20/80, preferably 85/15 to 22/78. In view of excellent chemical resistance, oil resistance, heat resistance, flexibility, and cold resistance, which result in that any crack is less likely to develop even if the molded product is kept in contact with the coolant at a high temperature for a long time, the molar ratio of units of the vinylidene fluoride to units of the fluorine-containing monomer (1) represented by formula (1) is preferably 85/15 to 60/40 in the copolymer (I).

The copolymer (II) is only of vinylidene fluoride, the fluorine-containing monomer represented by formula (1), and another monomer copolymerizable with the vinylidene fluoride and the fluorine-containing monomer represented by formula (1), wherein the molar ratio of units of the vinylidene fluoride to units of the fluorine-containing monomer (1) represented by formula (1) is 85/15 to 20/80, and units of the other monomer account for 1 to 50 mol% based on all monomer units. In view of excellent chemical resistance, oil resistance, heat resistance, flexibility, and cold resistance, which result in that any crack is less likely to develop even if it is kept in contact with the coolant at a high temperature for a long time, the molar ratio of units of the vinylidene fluoride to units of the fluorine-containing monomer (1) represented by formula (1) is preferably 85/15 to 50/50, more preferably 85/15 to 60/40 in the copolymer (II).

In view of excellent chemical resistance, oil resistance, heat resistance, flexibility, and cold resistance, which result in that any crack is less likely to develop even if it is kept in contact with the coolant at a high temperature for a long time, units of the other monomer account for preferably 1 to 40 mol%, further preferably 1 to 20 mol%, based on all monomer units in the copolymer (II). Suitable examples of the other monomer are as described above.

The copolymer (III) is of vinylidene fluoride, the fluorine-containing monomer represented by formula (1) below: CHX^{a} = CX^{b}Rf (1), wherein one of X^{a} and X^{b} is H, the other thereof is F, and Rf is a linear or branched fluoroalkyl group having 1 to 12 carbon atoms, and another monomer copolymerizable with the vinylidene fluoride and the fluorine-containing monomer, wherein the molar ratio of units of the vinylidene fluoride to units of the fluorine-containing monomer (1) is 85/15 to 20/80, units of the other monomer account for 0 to 50 mol% based on all monomer units, and the copolymer has a glass transition temperature of 25°C or less and contains at least one of an iodine atom and a bromine atom in a total content of 0.001 to 10 wt%.

The copolymer (III) preferably is only of vinylidene fluoride and the fluorine-containing monomer represented by formula (1) below: CHX^{a} = CX^{b}Rf (1), wherein one of X^{a} and X^{b} is H, the other thereof is F, and Rf is a linear or branched fluoroalkyl group having 1 to 12 carbon atoms, or is only of vinylidene fluoride, the fluorine-containing monomer represented by formula (1) below: CHX^{a} = CX^{b}Rf (1), wherein one of X^{a} and X^{b} is H, the other thereof is F, and Rf is a linear or branched fluoroalkyl group having 1 to 12 carbon atoms, and another monomer copolymerizable with the vinylidene fluoride and the fluorine-containing monomer, wherein the copolymer contains at least one of an iodine atom and a bromine atom in a total content of 0.001 to 10 wt%. In this case, the copolymer (III) is substantially only of the vinylidene fluoride and the fluorine-containing monomer represented by formula (1) or is substantially only of the vinylidene fluoride, the fluorine-containing monomer represented by formula (1), and the other monomer, wherein the copolymer contains at least one of an iodine atom and a bromine atom in a total content of 0.001 to 10 wt%. However, the copolymer (III) may be produced using a reactive emulsifier, without impairing the effects of the present disclosure. The copolymer (III) may also contain an iodine or bromine terminal or the like derived from a chain transfer agent.

More preferably, the copolymer (III) is only of vinylidene fluoride and the fluorine-containing monomer represented by formula (1) below: CHX^{a} = CX^{b}Rf (1), wherein one of X^{a} and X^{b} is H, the other thereof is F, and Rf is a linear or branched fluoroalkyl group having 1 to 12 carbon atoms, wherein the molar ratio of units of the vinylidene fluoride to units of the fluorine-containing monomer (1) is 80/20 to 20/80, and the copolymer contains at least one of an iodine atom and a bromine atom in a total content of 0.001 to 10 wt%.

In the copolymer (III), it is also preferable that the molar ratio of units of the vinylidene fluoride to units of the fluorine-containing monomer (1) be 85/15 to 50/50, and that units of the other monomer account for 0 to 50 mol% based on all monomer units.

The content of each monomer units is a value measured by NMR.

The copolymer (III) contains at least one of an iodine atom and a bromine atom in a total content of 0.001 to 10 wt%. The total content of the iodine atom and the bromine atom is preferably 0.01 to 5 wt%, more preferably 0.1 to 5 wt%. The content of iodine can be measured in the following manner: 5 mg of Na₂SO₃ is mixed with 12 mg of a sample (fluorine-containing polymer); combustion of the mixture is performed in oxygen in a combustion flask made of quartz using an absorption liquid obtained by dissolving 30 mg of a mixture of Na₂CO₃ and K₂CO₃ at 1:1 (weight ratio) in 20 ml of pure water, followed by standing for 30 minutes; the content of iodine is measured using a 20A ion chromatograph, available from SHIMADZU CORPORATION. A KI standard solution containing 0.5 ppm or 1.0 ppm of iodine ions can be used for a calibration curve.

The iodine atom and the bromine atom each may be bound at the end of the main chain of the copolymer (III), at the end of a side chain of the copolymer (III), or at both, of course. In such a copolymer, the iodine end or the bromine end serves as a crosslinking point (crosslinking site), so that a crosslinked fluorine-containing polymer with a high crosslinking density is obtained, and peroxide crosslinking can also be performed more easily.

The copolymer (III) may be produced using an iodine- or bromine-containing monomer as the monomer that gives a crosslinking site or can be produced using a bromine compound or an iodine compound as a polymerization initiator or a chain transfer agent.

In the copolymer (III), the other monomer is not limited, as long as it is copolymerizable with the vinylidene fluoride and the fluorine-containing monomer represented by formula (1), and one or more monomers may be used as the other monomer.

In the copolymer (III), the other monomer preferably accounts for 0 to 50 mol% based on all monomer units. The proportion is more preferably 0 to 40 mol%, further preferably 0 to 20 mol%.

Examples of the monomer that gives a crosslinking site in the copolymer (III) include:
an iodine- or bromine-containing monomer represented by the formula:

   CX¹₂ = CX¹-Rf¹CHR¹X²

   wherein X¹ is a hydrogen atom, a fluorine atom, or -CH₃, Rf¹ is a fluoroalkylene group, a perfluoroalkylene group, a fluoro(poly)oxyalkylene group, or a perfluoro(poly)oxyalkylene group, R¹ is a hydrogen atom or -CH₃, and X² is an iodine atom or a bromine atom;
an iodine- or bromine-containing monomer represented by the formula:

   CX¹₂ = CX¹-Rf¹X²

   wherein X¹ is a hydrogen atom, a fluorine atom, or -CH₃, Rf¹ is a fluoroalkylene group, a perfluoroalkylene group, a fluoro(poly)oxyalkylene group, or a perfluoro(poly)oxyalkylene group, and X² is an iodine atom or a bromine atom (preferably, an iodine-containing monomer represented by the formula: CH₂=CH(CF₂)ₙI, wherein n is an integer of 2 to 8);
a monomer represented by the formula:

   CF₂ = CFO(CF₂CF(CF₃)O)ₘ(CF₂)ₙ-X³

   wherein m is an integer of 0 to 5, n is an integer of 1 to 3, X³ is a cyano group, a carboxyl group, an alkoxycarbonyl group, an iodine atom, or a bromine atom;
a monomer represented by the formula:

   CH₂ = CFCF₂O(CF(CF₃)CF₂O)ₘ(CF(CF₃))ₙ-X⁴

   wherein m is an integer of 0 to 5, n is an integer of 1 to 3, X⁴ is a cyano group, a carboxyl group, an alkoxycarbonyl group, an iodine atom, a bromine atom, or -CH₂OH; and
a monomer represented by the formula:

   CR²R³=CR⁴-Z-CR⁵=CR⁶R⁷

   wherein R², R³, R⁴, R⁵, R⁶, and R⁷ are the same or different and are each a hydrogen atom or an alkyl group having 1 to 5 carbon atoms, Z is a linear or branched alkylene group having 1 to 18 carbon atoms and optionally having an oxygen atom, a cycloalkylene group having 3 to 18 carbon atoms, an alkylene group or an oxyalkylene group at least partially fluorinated and having 1 to 10 carbon atoms, or a (per)fluoropolyoxyalkylene group represented by -(Q)ₚ-CF₂O-(CF₂CF₂O)ₘ(CF₂O)ₙ-CF₂-(Q)ₚ-, wherein Q is an alkylene group or an oxyalkylene group, p is 0 or 1, and m/n is 0.2 to 5 and having a molecular weight of 500 to 10,000.

Examples of the compound represented by the aforementioned formula: CR²R³=CR⁴-Z-CR⁵=CR⁶R⁷ include CH₂=CH- (CF₂)₂-CH=CH₂, CH₂=CH- (CF₂)₄-CH=CH₂, CH₂=CH-(CF₂)₆-CH=CH₂, and a monomer represented by the following formula: CH₂=CH-Z¹-CH=CH₂, wherein Z¹ is a fluoropolyoxyalkylene group represented by -CH₂OCH₂-CF₂O-(CF₂CF₂O)ₘ₁(CF₂O)ₙ₁-CF₂-CH₂OCH₂-, wherein m1/n1 is 0.5, and the molecular weight is 2,000.

In one of preferable embodiments, the monomer that gives a crosslinking site is at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃) CF₂OCF(CF₃)CN, CH₂=CFCF₂OCF (CF₃)CF₂OCF(CF₃)COOH, CH₂=CFCF₂OCF(CF₃)CF₂OCF(CF₃)CH₂OH, CH₂=CHCF₂CF₂I, and CH₂=CH(CF₂)₂CH=CH₂. The monomer that gives a crosslinking site is particularly preferably CF₂=CFOCF₂CF₂CH₂I, since it can improve the crosslinking density to give good compression set in crosslinking using a peroxide.

Further, in one of preferable embodiments, the monomer that gives a crosslinking site is at least one monomer selected from the group consisting of:
an iodine- or bromine-containing monomer represented by the formula:

   CX¹₂=CX¹-Rf¹CHR¹X²

   wherein X¹ is a hydrogen atom, a fluorine atom, or -CH₃, Rf¹ is a fluoroalkylene group, a perfluoroalkylene group, a fluoropolyoxyalkylene group, or a perfluoropolyoxyalkylene group, R¹ is a hydrogen atom or -CH₃, and X² is an iodine atom or a bromine atom;
an iodine- or bromine-containing monomer represented by the formula:

   CX¹₂=CX¹-Rf¹X²

   wherein X¹ is a hydrogen atom, a fluorine atom, or -CH₃, Rf¹ is a fluoroalkylene group, a perfluoroalkylene group, a fluoropolyoxyalkylene group, or a perfluoropolyoxyalkylene group, and X² is an iodine atom or a bromine atom (preferably, an iodine-containing monomer represented by CH₂=CH(CF₂)ₙI, wherein n is an integer of 2 to 8);
a monomer represented by the formula:

   CF₂=CFO(CF₂CF(CF₃)O)ₘ(CF₂)ₙ-X⁵

   wherein m is an integer of 0 to 5, n is an integer of 1 to 3, and X⁵ is an iodine atom or a bromine atom; and
a monomer represented by the formula:

   CH₂=CFCF₂O(CF(CF₃)CF₂O)ₘ(CF(CF₃))ₙ-X⁵

   wherein m is an integer of 0 to 5, n is an integer of 1 to 3, and X⁵ is an iodine atom or a bromine atom. The copolymer (III) can be also produced using such an iodine- or bromine-containing monomer as the other monomer.

In the copolymer (III), the monomer that gives a crosslinking site preferably accounts for 0.01 to 10 mol%, more preferably 0.01 to 2 mol%, based on all monomer units.

The fluorine-containing elastomer is further preferably the copolymer (III) in view of excellent chemical resistance, oil resistance, heat resistance, flexibility, and cold resistance.

The fluorine-containing elastomer preferably has a number-average molecular weight (Mn) of 7,000 to 500,000 and a weight-average molecular weight (Mw) of 10,000 to 1,000,000, with Mw/Mn being 1.3 to 4.0, further preferably 1.4 to 3.9, in view of excellent chemical resistance, oil resistance, heat resistance, flexibility, and cold resistance, which result in that the molded product is less likely to crack even if it is kept in contact with the coolant at a high temperature for a long time. The number-average molecular weight (Mn), the weight-average molecular weight (Mw), and Mw/Mn are values measured by GPC.

The fluorine-containing elastomer preferably has a Mooney viscosity at 100°C (ML1 + 10 (100°C)) of 2 or more, more preferably 5 or more, for good moldability. Similarly, for good moldability, the Mooney viscosity is preferably 200 or less, more preferably 150 or less, still more preferably 100 or less. The Mooney viscosity is a value measured according to ASTM-D1646 and JIS K6300.

The fluorine-containing elastomer can be produced by a conventionally known method.

The molded product of the present disclosure is formed of a crosslinked product of the fluorine-containing elastomer.

In the molded product of the present disclosure, the crosslinked product is preferably obtained by crosslinking a crosslinkable composition containing the fluorine-containing elastomer and a crosslinking agent.

The crosslinking agent is not limited, as long as it is a crosslinking agent generally used for polyamine crosslinking, polyol crosslinking, and peroxide crosslinking, but is preferably at least one selected from the group consisting of polyamine compounds, polyhydroxy compounds, and organic peroxides, more preferably organic peroxides.

Examples of the polyamine compounds include hexamethylenediamine carbamate, N,N'-dicinnamilidene-1,6-hexamethylenediamine, and 4,4'-bis(aminocyclohexyl)methane carbamate. Among these, N,N'-dicinnamilidene-1,6-hexamethylenediamine is preferable.

Polyhydroxy aromatic compounds are suitably used as the polyhydroxy compounds, for excellent heat resistance. The polyhydroxy aromatic compounds are not limited, and examples thereof include 2,2-bis(4-hydroxyphenyl)propane (which will be hereinafter referred to as bisphenol A), 2,2-bis(4-hydroxyphenyl)perfluoropropane (which will be hereinafter referred to as bisphenol AF), resorcinol, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (which will be hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may be alkali metal salts, alkaline earth metal salts, and the like, but it is preferable not to use the aforementioned metal salts in the case where the copolymer is coagulated using an acid.

In the case where the crosslinking agent is a polyhydroxy compound, a crosslinking accelerator is preferably contained. The crosslinking accelerator promotes formation of intramolecular double bonds in dehydrofluoric acid reaction of the main chain of the fluorine-containing polymer and addition of the polyhydroxy compound to the double bonds formed.

Examples of the crosslinking accelerator include onium compounds. Among the onium compounds, at least one selected from the group consisting of ammonium compounds such as quaternary ammonium salts, phosphonium compounds such as quaternary phosphonium salts, oxonium compounds, sulfonium compounds, cyclic amines, and monofunctional amine compounds is preferable, and at least one selected from the group consisting of quaternary ammonium salts and quaternary phosphonium salts is more preferable.

The quaternary ammonium salts are not limited, and examples thereof include 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methylsulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5,4,0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (which will be hereinafter referred to as DBU-B), 8-benzyl-1,8-diazabicyclo[5.4.0]-7-undecenium hydroxide, 8-phenethyl-1,8-diazabicyclo[5.4.0]-7-undecenium chloride, and 8-(3-phenyl propyl)-1,8-diazabicyclo[5.4.0]-7-undecenium chloride. Among these, DBU-B is preferable for excellent crosslinkability and various physical properties.

The quaternary phosphonium salts are not limited, and examples thereof include tetrabutylphosphonium chloride, benzyltriphenylphosphonium chloride (which will be hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride. Among these, benzyltriphenylphosphonium chloride (BTPPC) is preferable for excellent crosslinkability and various physical properties.

The crosslinking accelerator to be used can also be a quaternary ammonium salt, a solid solution of a quaternary phosphonium salt and bisphenol AF, or a chlorine-free crosslinking accelerator disclosed in Japanese Patent Application Laid-Open No. 11-147891.

The amount of the crosslinking accelerator to be mixed is not limited but is preferably 0.01 to 8 parts by mass, more preferably 0.02 to 5 parts by mass, with respect to 100 parts by mass of the fluorine-containing elastomer. When the crosslinking accelerator is less than 0.01 parts by mass, there is a tendency that the fluorine-containing polymer is not sufficiently crosslinked, and that the chemical resistance, the oil resistance, and the heat resistance of a molded product to be obtained are thus reduced. When the crosslinking accelerator is over 8 parts by mass, there is a tendency that the moldability of the crosslinkable composition is reduced.

The organic peroxides may be organic peroxides capable of easily generating radicals in the presence of heat or redox systems, and examples thereof include 1,1-bis(t-butylperoxy)-3,5,5-trimethylcyclohexane, 2,5-dimethyl hexane-2,5-dihydro peroxide, di-t-butyl peroxide, t-butylcumyl peroxide, dicumyl peroxide, α, α-bis(t-butylperoxy)-p-diisopropylbenzene, 2,5-dimethyl-2,5-di(t-butylperoxy)hexane, 2,5-dimethyl-2,5-di(t-butylperoxy)-hexin-3, benzoyl peroxide, t-butylperoxybenzene, t-butylperoxymaleic acid, t-butylperoxyisopropyl carbonate, and t-butyl peroxybenzoate. Among these, 2,5-dimethyl-2,5-di(t-butylperoxy)hexane and 2,5-dimethyl-2,5-di(t-butylperoxy)-hexin-3 are preferable.

In the case where the crosslinking agent is an organic peroxide, the crosslinking agent preferably contains a crosslinking aid. Examples of the crosslinking aid include triallyl cyanurate, trimethallyl isocyanurate, triallyl isocyanurate (TAIC), triacrylic formal, triallyltrimellitate, N,N'-m-phenylenebismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trion, tris(diallylamine)-S-triazine, triallyl phosphite, N,N-diallyl acrylamide, 1,6-divinyl dodecafluorohexane, hexaallyl phosphoramide, N,N,N',N'-tetraallyl phthalamide, N,N,N',N'-tetraallyl malonamide, trivinyl isocyanurate, 2,4,6-trivinyl methyltrisiloxane, tri(5-norbornene-2-methylene) cyanurate, and triallyl phosphite. Among these, triallyl isocyanurate (TAIC) is preferable for excellent crosslinkability and various physical properties.

The amount of the crosslinking aid to be mixed is not limited but is preferably 0.01 to 10 parts by mass, more preferably 0.1 to 5.0 parts by mass, with respect to 100 parts by mass of the fluorine-containing elastomer. When the crosslinking aid is less than 0.01 parts by mass, there is a tendency that the crosslinking time is too long to be practical. When the crosslinking aid is over 10 parts by mass, there is a tendency that the crosslinking time is too short, and also that the compression set of the molded product is reduced.

Further, the crosslinkable composition can contain additives that are generally mixed in the fluorine-containing elastomer composition, e.g., various additives such as fillers (such as carbon black and barium sulfate), acid acceptors, processing aids (such as waxes), plasticizers, colorants, stabilizers, adhesion aids, mold release agents, conductivity imparting agents, thermal conductivity imparting agents, surface non-adhesives, flexibility imparting agents, heat resistance improvers, and flame retarders, as required. One or more conventional crosslinking agents or crosslinking accelerators different from those described above may be mixed. The content of fillers such as carbon black is not limited but is preferably 0 to 150 parts by mass, more preferably 1 to 100 parts by mass, further preferably 2 to 50 parts by mass, with respect to 100 parts by mass of the fluorine-containing elastomer. The content of the processing aids such as waxes is preferably 0 to 10 parts by mass with respect to 100 parts by mass of the peroxide-crosslinkable fluorine-containing elastomer.

Crosslinking and molding of the fluorine-containing elastomer or the crosslinkable composition can be performed by conventionally known methods.

The molded product formed of the crosslinked product of the present disclosure can be produced by crosslinking and molding the fluorine-containing elastomer or the crosslinkable composition using conventionally known methods.

The molded product of the present disclosure has a surface that is to be in contact with a coolant. In the molded product of the present disclosure, it is necessary that at least part of the surface that is to be in contact with a coolant be formed of the crosslinked product of the fluorine-containing elastomer, and it is preferable that the entire surface that is to be in contact with a coolant be formed of the crosslinked product of the fluorine-containing elastomer.

The molded product of the present disclosure is less likely to crack even if the surface in contact with a coolant is in contact with a coolant at 100°C or more for a long time. Further, even if the temperature of the surface in contact with a coolant is 100°C or more, or even if the molded product in the state in which the temperature of the entire molded product is 100°C or more is in contact with the coolant for a long time, cracks are less likely to develop. Therefore, the molded product is useful for applications in which the molded product is in contact with a coolant at 100°C or more for a long time, or applications in which the molded product is in contact with a coolant, particularly, a coolant at 100°C or more for a long time while the surface of the molded product or the entire molded product is heated to 100°C or more. For example, it can be used in an engine room of an automobile and the like where the temperature becomes high, a fuel cell, a secondary battery, or a device used in the field of chemicals, medicine, food equipment, equipment and parts for energy resource exploration and mining, or the like.

The molded product of the present disclosure is used with the surface formed of the crosslinked product of the fluorine-containing elastomer being in contact with a coolant.

The coolant that can be suitably used contains components that cause cracks in conventional fluoroelastomer (FKM) when it is in contact with a coolant at a high temperature for a long time. Examples of the components that cause cracks include alcohols, surfactants, and rust inhibitors.

Examples of the alcohols include monohydric alcohols, dihydric alcohols, trihydric alcohols, and glycol monoalkyl ethers.

Examples of the monohydric alcohols include one or a mixture of two or more selected from methanol, ethanol, propanol, butanol, pentanol, hexanol, heptanol, and octanol.

Examples of the dihydric alcohols include those composed of one or a mixture of two or more selected from ethylene glycol, diethylene glycol, triethylene glycol, propylene glycol, 1,3-propanediol, 1,4-butanediol, 1,3-butanediol, 1,5-pentanediol, and hexylene glycol.

Examples of the trihydric alcohols include one or a mixture of two or more selected from glycerin, trimethylol ethane, trimethylolpropane, 5-methyl-1,2,4-heptane triol, and 1,2,6-hexanetriol.

Examples of the glycol monoalkyl ethers include one or a mixture of two or more selected from ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

The surfactants may be any of nonion surfactants, anion surfactants, cation surfactants, and amphoteric surfactants. Such surfactants may be used singly or in combinations of two or more.

Examples of the rust inhibitors include any one or a mixture of two or more of phosphoric acid and/or a salt thereof, aliphatic carboxylic acid and/or a salt thereof, aromatic carboxylic acid and/or a salt thereof, triazoles, thiazoles, silicate, nitrate, nitrite, borate, molybdate, and amine salt.

The coolant may contain water or another organic solvent in addition to the aforementioned components.

The coolant preferably contains water or an organic solvent such as alcohols, more preferably water and alcohols. The coolant can contain 40 to 80 wt% of water and can contain in the range of 20 to 60 w% of an alcohol, for example. Among the examples of the alcohols, ethylene glycol is particularly preferable.

The coolant preferably has a pH at 25°C of 6 or more, more preferably 7 or more, and preferably 10 or less, more preferably 9 or less.

The molded product of the present disclosure is not limited, as long as it is used in contact with a coolant but can be suitably used, for example, in cooling systems for engines, fuel cells, secondary batteries, or cooling systems of equipment used in the fields of chemicals such as chemical plants, medicine such as chemical plants, food equipment including food plant equipment and household products, and equipment and parts for exploration and mining of energy resource such as petroleum and gas, since the molded product is less likely to crack even when being kept in contact with a coolant at 180°C for 1008 hours.

Examples of the usage of the molded product of the present disclosure include various seal materials such as rings, packings, gaskets, diaphragms, oil seals, bearing seals, lip seals, plunger seals, door seals, lip and face seals, gas delivery plate seals, wafer support seals, and barrel seals, and packings.

The molded product can be used also as tubes, hoses, rolls, various rubber rolls, flexible joints, rubber plates, coatings, belts, dampers, valves, valve seats, valve bodies, chemical resistant coating materials, laminating materials, lining materials, and the like.

The rings, packings, and seals may have various sectional shapes, specifically, such as square, O-, and ferrule shapes, or unusual shapes such as D-, L-, T-, V-, X-, and Y-shapes.

Particularly in the cooling systems of car engines, the molded product can be used for engine oil cooler hoses, oil return hoses, seal gaskets, water hoses in the periphery of radiators, radiator seals, radiator gaskets, radiator O-rings, vacuum pump oil hoses, water pump seals, water pump O-rings, water pump bellows, radiator hoses, radiator tanks, oil pressure diaphragms, fan coupling seals, thermostat gaskets, thermostat O-rings, reservoir tank packings, and the like. Particularly in the cooling systems of fuel cells, the molded product can be used for separator seals, separator gaskets, separator O-rings, radiator seals, radiator gaskets, radiator O-rings, pipes, joints, valves, ion exchanger seals, ion exchanger gaskets, ion exchanger O-rings, pumps, and the like.

The applications of the molded product of the present disclosure for automobile-related parts include the applications for parts of motorcycles and the applications for work vehicles with the same structure.

In the field of chemicals such as chemical plants or in the field of medicine such as pharmaceutical products, the molded product can be used as hoses, seals, gaskets, O-rings, bellows, tanks, diaphragms, packings, and the like in the cooling systems of equipment used in steps of producing, for example, chemical products such as pharmaceutical products, agricultural chemicals, coating materials, and resins.

Examples of the equipment used in the fields of chemicals and medicine include chemical equipment such as heat exchangers and stirrers, chemical pumps, flow meters, chemical pipes, pesticide sprayers, pesticide transfer pumps, gas pipes, fuel cells, analysis equipment, physics and chemistry equipment (for example, analytical equipment and instruments), flue gas desulfurization equipment, nitric acid plants, power plant turbines, chemical pumps, high temperature vacuum dryers, sulfuric acid production equipment, diaphragm pumps, and flue gas desulfurization plants.

In the field of food equipment including the food plant equipment and household products, the molded product can be used as hoses, seals, gaskets, O-rings, bellows, tanks, diaphragms, packings, and the like, in steps of producing foods and in the cooling systems of equipment used for transporting or storing foods.

Examples of the equipment used in the field of food equipment include heat exchangers, plate heat exchangers, vending machines, jarpots, water heaters, food processing equipment, filling equipment for alcoholic beverages, soft drinks, etc., food sterilizers, brewing equipment, and various automatic food vending machines.

In the field of equipment and parts for exploration and mining of energy resource such as petroleum and gas, the molded product can be used as hoses, seals, gaskets, O-rings, bellows, tanks, diaphragms, packings, or the like, in the cooling systems of equipment used for mining petroleum, natural gas, or the like.

Examples of the equipment used in the field of equipment and parts for energy resource exploration and mining include heat exchangers, drills, horizontal drilling motors, blowout prevention equipment (BOP), rotational blowout prevention equipment, MWD (real time drilling information detection systems), logging equipment, cementing equipment, perforators (drilling equipment), mad pumps, hydraulic fracturing equipment, and LWD (logging during excavation).

Further, the molded product of the present disclosure can be used as various parts in various fields. Next, the applications of the molded product of the present disclosure will be described.

The molded product of the present disclosure can be used for surface modifiers for surfaces made of metal, rubber, plastic, glass, and the like; seal materials and covering materials that are required to have heat resistance, chemical resistance, oil resistance, and non-stickiness, such as metal gaskets and oil seals; non-stick covering materials such as rolls for OA equipment and belts for OA equipment, or bleed barriers; and applications to woven fabric sheets and belts by impregnation and baking.

The molded product of the present disclosure with high viscosity and high concentration can be used for seal materials, linings, or sealants with complex shapes by common usage. The molded product with low viscosity can be used for formation of a thin film of several microns. The molded product with medium viscosity can be used for coating of precoated metals, O-rings, diaphragms, and lead valves. Further, the molded product can be used for coating of conveyor rolls or belts for woven fabrics or paper sheets, printing belts, chemical resistant tubes, medicine stoppers, fuel hoses, and the like.

The molded product of the present disclosure can be used also as a covering material, and examples of the object to be covered include metals such as iron, stainless steel, copper, aluminum, carbon steel, and brass; glass products such as glass plates, and woven fabrics and non-woven fabrics of glass fibers; molded products of and materials covered with a general purpose and heat resistant resin such as polypropylene, polyoxymethylene, polyimide, polyamide imide, polysulfone, polyethersulfone, polyetheretherketone, and the like; molded products of and materials covered with general purpose rubbers such as SBR, butyl rubber, NBR, and EPDM, and heat resistant rubbers such as silicone rubbers and fluoroelastomers; and woven fabrics and non-woven fabrics of natural fibers and synthetic fibers.

The molded product of the present disclosure is less likely to crack even if it is kept in contact with a coolant at a high temperature for a long time and is therefore useful for covering silicone rubbers, nitrile rubbers, and other elastomers. The molded product of the present disclosure can be used also as a sealing member at a connection part and a coupling part of a hose or a tube to another part. The molded product is useful also in repairing manufacturing defects (and damage caused by use) in a multilayer rubber structure such as multilayer hoses.

The molded product is useful also for covering a thin steel plate that can be formed or embossed before or after a coating material is applied. For example, multiple layers of the thus covered steel can also be assembled to create a gasket between two rigid metal members.

Other than above, the molded product of the present disclosure can be used also as a coating agent; a base material-integrated gasket or packing formed by dispenser molding on a base material containing an inorganic material such as metals and ceramics; or a multilayer product formed by coating a base material containing an inorganic material such as metals and ceramics.

Although the embodiments have been described above, it will be understood that various changes in form and details can be made without departing from the spirit and scope of the claims.

### EXAMPLES

Next, the embodiments of the present disclosure will be described with reference to examples, but the present disclosure is not limited to the examples.

The materials used in Examples and Comparative Examples are shown below.
Fluorine-containing elastomer (1): VDF/2,3,3,3-tetrafluoropropene = 77/23 mol%, a glass transition temperature of -13°C, and an iodine content of 0.12 wt%
Fluorine-containing elastomer (2): VDF/HFP/TFE = 50/30/20 mol%, a glass transition temperature of -5°C, and an iodine content of 0.23 wt%
Fluorine-containing elastomer (3): Pre-compound (for polyol crosslinking) with VDF/HFP/TFE = 61/18/21 mol% and a glass transition temperature of -15°C
Carbon black: Thermax N990, available from Cancarb Limited
TAIC: Triallyl isocyanurate
Perhexa 25B: 2,5-Dimethyl-2,5-di(t-butylperoxy)hexane, available from NOF CORPORATION
Magnesium oxide: MA150, available from Kyowa Chemical Industry Co., Ltd.
Calcium hydroxide: NICC5000, available from Inoue Calcium Corporation
Coolant (1): TOYOTA SUPER LONG LIFE COOLANT (0888901005), available from TOYOTA MOTOR CORPORATION
Coolant (2): PITWORK LLC long lifetime type Super Long Life Coolant KQ301-34002, available from Nissan Motor Co., Ltd.

### Example 1 and Comparative Example 1

The components shown in Table 1 and Table 2 were mixed in the amounts described in Table 1 and Table 2, followed by kneading by a common method using an 8-inch open roll, to prepare a fluorine-containing elastomer composition. The fluorine-containing elastomer composition obtained was pressed for crosslinking and molding to perform primary crosslinking, followed by secondary crosslinking using a heat oven. The conditions for the primary crosslinking were 160°C and 10 minutes, and the conditions for the secondary crosslinking were 180°C and 4 hours. Using the molded product obtained, the following evaluation was performed. Table 1 and Table 2 show the results.

### Comparative Example 2

The components shown in Table 1 and Table 2 were mixed in the amounts described in Table 1 and Table 2, followed by kneading by a common method using an 8-inch open roll, to prepare a fluorine-containing elastomer composition. The fluorine-containing elastomer composition obtained was pressed for crosslinking and molding to perform primary crosslinking, followed by secondary crosslinking using a heat oven. The conditions for the primary crosslinking were 170°C and 10 minutes, and the conditions for the secondary crosslinking were 230°C and 24 hours. Using the molded product obtained, the following evaluation was performed. Table 1 and Table 2 show the results.

### <Tensile properties>

According to JIS K6251, the 100% Modulus (M100), the tensile strength at break (Tb), and the tensile elongation at break (Eb) were measured.

### <Hardness (Hs [Shore A])>

According to JIS K6253, the hardness was measured using a durometer type A (value 3 seconds after the peak value).

### <Coolant immersion test>

Immersion tests were performed using aqueous solutions of coolants (1) and (2) (coolant:water = 50:50 (vol%)) at 180°C for the immersion time shown in Table 1 and Table 2. A JIS No. 6 dumbbell was used as a test piece, and the 100% modulus (M100), the tensile strength at break (Tb), the tensile elongation at break (Eb), the hardness (Hs [Shore A]), and the volume swelling ratio (ΔV) after the immersion test were measured, to determine the rate of change against each value before the immersion. The value ΔV was the rate of change of volume (representing the degree of swelling) after the sample piece was immersed under predetermined conditions. ΔV is represented by ΔV = (V - Vo)/Vo × 100, wherein Vo represents the original volume of the sample piece and V represents the volume after the test. The volume was calculated from the weight in air and the weight in water. Further, the appearance was observed to check whether cracks had developed.

### [Table 1]

**Table 1**

| | | | Example 1 | Comparative Example 1 | Comparative Example 2 |
|---|---|---|---|---|---|
| Formulation (parts by weight) | | Fluorine-containing elastomer (1) | 100 | | |
| | | Fluorine-containing elastomer (2) | | 100 | |
| | | Pre-compound of fluorine-containing elastomer (3) | | | 100 |
| | | N990 | 20 | 20 | 20 |
| | | TAIC | 4 | 4 | |
| | | Perhexa 25B | 1.5 | 1.5 | |
| | | MA150 | | | 3 |
| | | NICC5000 | | | 6 |
| Physical properties in normal condition | | M100(MPa) | 1.8 | 3.2 | 3.3 |
| | | Tb(MPa) | 23.4 | 23.5 | 15.2 |
| | | Eb(%) | 606 | 317 | 332 |
| | | Hardness(shoreA;peak) | 67 | 72 | 73 |
| | | Hardness(shoreA;3s) | 59 | 67 | 66 |
| | 72 hours later | ΔM100(%) | -1 | -12 | 19 |
| | | ΔTb(%) | -15 | -11 | -43 |
| | | ΔEb(%) | -6 | 10 | -5 |
| | | ΔHardness(pts)(shoreA;peak) | -2 | -1 | 8 |
| | | ΔHardness(pts)(shoreA;3s) | -1 | 0 | 7 |
| | | ΔV(%) | 2.6 | 1.5 | 5.0 |
| | | Appearance | No change | No change | Loss of gloss |
| | 168 hours later | ΔM100(%) | 0 | -2 | 0 |
| | | ΔTb(%) | -25 | -21 | -62 |
| | | ΔEb(%) | -4 | 2 | -17 |
| | | ΔHa rdness(pts) (shoreA;peak) | -2 | 0 | 7 |
| | | ΔHardness(pts)(shoreA;3s) | -1 | 0 | 7 |
| Physical after | | Δv(%) | 2.4 | 1.7 | 6.1 |
| properties immersion test | | Appearance | No change | No change | Cracks |
| using coolant | 504 hours later | ΔM100(%) | -1 | 7 | -5 |
| (1) | | ΔTb(%) | -24 | -32 | -79 |
| | | ΔEb(%) | -11 | -12 | -62 |
| | | ΔHardness(pts)(shoreA;peak) | -1 | 1 | 7 |
| | | ΔHardness(pts)(shoreA;3s) | -1 | 1 | 7 |
| | | ΔV(%) | 2.8 | 2.0 | 6.1 |
| | | Appearance | No change | No change | Cracks |
| | 1008 hours later | ΔM100(%) | -5 | -29 | - |
| | | ΔTb(%) | -33 | -53 | -88 |
| | | ΔEb(%) | -23 | 75 | -98 |
| | | ΔHa rdness(pts) (shoreA;peak) | -4 | 1 | 7 |
| | | ΔHardness(pts)(shoreA;3s) | -3 | -1 | 3 |
| | | ΔV(%) | 3.0 | 5.4 | 15.5 |
| | | Appearance | No change | Cracks | Cracks |

### [Table 2]

**Table 2**

| | | | Example 1 | Comparative Example 1 | Comparative Example 2 |
|---|---|---|---|---|---|
| Formulation (parts by weight) | | Fluorine-containing elastomer (1) | 100 | | |
| | | Fluorine-containing elastomer (2) | | 100 | |
| | | Pre-compound of fluorine-containing elastomer (3) | | | 100 |
| | | N990 | 20 | 20 | 20 |
| | | TAIC | 4 | 4 | |
| | | Perhexa 25B | 1.5 | 1.5 | |
| | | MA150 | | | 3 |
| | | NICC5000 | | | 6 |
| Physical properties in normal condition | | M100(MPa) | 1.8 | 3.2 | 3.3 |
| | | Tb(MPa) | 23.4 | 23.5 | 15.2 |
| | | Eb(%) | 606 | 317 | 332 |
| | | Hardness(shoreA;peak) | 67 | 72 | 73 |
| | | Hardness(shoreA;3s) | 59 | 67 | 66 |
| | 72 hours later | ΔM100(%) | 0 | -7 | 14 |
| | | ΔTb(%) | -13 | -4 | -43 |
| | | ΔEb(%) | 3 | 13 | 0 |
| | | ΔHardness(pts)(shoreA;peak) | -2 | -1 | 6 |
| | | ΔHardness(pts)(shoreA;3s) | -1 | -1 | 6 |
| | | Δv(%) | 2.8 | 2.0 | 5.5 |
| | | Appearance | No change | No change | Loss of gloss |
| | 168 hours later | ΔM100(%) | -1 | -4 | -3 |
| | | ΔTb(%) | -20 | -35 | -62 |
| | | ΔEb(%) | -3 | -13 | -14 |
| | | ΔHardness(pts)(shoreA;peak) | -1 | 0 | 6 |
| | | ΔHardness(pts)(shoreA;3s) | 0 | 0 | 5 |
| Physical | | ΔV(%) | 2.9 | 2.1 | 7.0 |
| properties after immersion test | | Appearance | No change | No change | Cracks |
| using coolant | 504 hours later | ΔM100(%) | 4 | 0 | -28 |
| (2) | | ΔTb(%) | -26 | -12 | -81 |
| | | ΔEb(%) | -9 | 14 | -28 |
| | | ΔHardness(pts)(shoreA;peak) | -2 | 2 | 2 |
| | | ΔHardness(pts)(shoreA;3s) | -1 | 1 | -1 |
| | | ΔV(%) | 3.1 | 3.1 | 11.5 |
| | | Appearance | No change | Wrinkles | Cracks |
| | 1008 hours later | ΔM100(%) | 0 | -27 | - |
| | | ΔTb(%) | -32 | -53 | -91 |
| | | ΔEb(%) | -23 | 69 | -95 |
| | | ΔHardness(pts)(shoreA;peak) | -4 | 1 | -3 |
| | | ΔHardness(pts)(shoreA;3s) | -2 | -2 | -8 |
| | | ΔV(%) | 3.1 | 5.3 | 28.7 |
| | | Appearance | No change | Cracks | Cracks |

## Claims

1. A molded product having a surface that is to be in contact with a coolant, the surface being formed of a crosslinked product of an amorphous fluorine-containing elastomer having a glass transition temperature of 25°C or less, the fluorine-containing elastomer being a copolymer of:
vinylidene fluoride;
a fluorine-containing monomer represented by formula (1) below:
CHX^{a} = CX^{b}Rf (1)
wherein one of X^{a} and X^{b} is H, the other thereof is F, and Rf is a linear or branched fluoroalkyl group having 1 to 12 carbon atoms; and
another monomer copolymerizable therewith,
wherein a molar ratio of units of the vinylidene fluoride to units of the fluorine-containing monomer is 87/13 to 20/80, and
units of the other monomer account for 0 to 50 mol% based on all monomer units.

2. The molded product according to claim 1, wherein
the fluorine-containing elastomer has an iodine atom or a bromine atom in a total content of 0.01 to 10 wt%.

3. The molded product according to claim 1 or 2, wherein
the coolant comprises an alcohol.

4. The molded product according to any one of claims 1 to 3, wherein the molded product is a seal material, a tube, or a hose.

5. The molded product according to any one of claims 1 to 4, for use in a cooling system of an engine, a fuel cell, or a secondary battery, or in a cooling system of equipment used in the field of chemicals, medicine, food equipment, or equipment and parts for energy resource exploration and mining.

6. The molded product according to any one of claims 1 to 5, wherein the surface of the molded product is to be in contact with a coolant at 100°C or more when use.
